# EUROPÄISCHE PATENTSCHRIFT

(11) **EP 1 100 866 B1**
(45) Veröffentlichungstag und Bekanntmachung des Hinweises auf die Patenterteilung: **15.12.2004**
(21) Anmeldenummer: 00912488.4
(22) Anmeldetag: 19.02.2000
(51) Int. Cl.: C12C 13/10

(54) **BRAUBEHÄLTER**
BREW POT
CUVE DE BRASSAGE

(30) Priorität: 26.02.1999 DE 19908472
(43) Veröffentlichungstag der Anmeldung: 23.05.2001
(73) Patentinhaber: Hauner, Manfred, 91448 Emskirchen (DE)
(72) Erfinder: Rebbe, Klaus, 68305 Mannheim (DE); Hastenteufel, Harry, 68305 Mannheim (DE)
(74) Vertreter: Mielke, Klaus
(86) Internationale Anmeldenummer: PCT/EP2000/001374
(87) Internationale Veröffentlichungsnummer: WO 2000/052131

(56) Entgegenhaltungen:
- DE-C- 4 440 600
- DE-C- 19 524 783

## Beschreibung

Es werden zur Zeit sehr komplexe Bierbrauanlagen für den Laien angeboten. In den Schriften DE 44 40 600 C1, DE 195 24 783 C1, DE 195 03 244 A1 und DE 197 03 076 C1 sind Einbehältergeräte beschrieben. die das Selberbrauen schon wesentlich erleichtern. Diese Geräte werden alle wegen der innen am Boden liegenden Filtereinheiten direkt im Behälter beheizt.

Der Patentanmeldung lag die Aufgabe zugrunde, einen Braubehälter zu entwickeln, der zur guten Bedienbarkeit zwei außenliegende Filtereinheiten besitzt und von außen beheizbar ist und als Einbehälter-Braugerät verwendbar ist.

Die Aufgabe wird dadurch gelöst, daß ein bodenloser Mittelteil (10) mit zwei Hohldeckeln (13a,13b) durch Ring-Spannverschlüsse (14) verbunden wird. Der eine Hohldeckel (13a) ist im Prozessablauf zur Aufnahme des Würzefiltergutes der andere (13b) zur Aufnahme des Maischefiltergutes vorgesehen. Wegen der unterschiedlichen Mengen haben die Hohldeckel auch unterschiedliche Höhen. Da der Braubehälter nach Einsetzen einer Filterscheibe zwischen die Spannfedern (17) des oberen Hohldeckels und nach Beendigung des Filtervorganges ( Absenken der Filterscheibe bis zwischen die Spannfedern (17) des unteren Hohldeckels ) gedreht werden muß. sind an den Hohldeckeln (13a,13b) und am Doppelmantel (11) Handgriffe (19) für ein manuelles und zwei Achszapfen (12) für ein maschinelles Umdrehen ( bei größeren Volumina ) angebracht. Nach Umdrehen des Behälters um 180° kann der das Filtergut beinhaltende Hohldeckel (13a,13b) vom bodenlosen Mittelteil (10) nach Entfernen des Ring-Spannverschlusses (14) abgenommen werden.

Nach Entleerung des Maischefiltergutes, der Säuberung und dem erneuten Aufsetzen des Rührwerkes und der Messfühler auf den Hohldeckel (13b), kann der zweite Teilbrauprozess. das Würzekochen, durchgeführt werden. Am Ende des Prozesses wird die zweite Filterung mit dem Hohldeckel (13a)vorgenommen.

Alternativ oder unterstützend zum Doppelmantel können die Hohldeckel (13a,13b) mit den Zwischenböden (26.27), den Rohren (30), den Dichtbuchsen (28) und dem zusätzlichen Dichtring (29) als Kühleinheit eingesetzt werden.

In der zweiten Ausführung werden die Hohldeckel (13d,13e) prozessabhängig nacheinander nur unten am Mittelteil (10) befestigt. Die Aufnahmen für Rührwerk, Filterachse und Meßfühler sind an einem Flachdeckel (13c) befestigt, der das Mittelteil (10) oben verschließt In den Hohldeckeln (13d,13e) befinden sich an Stelle der Spannfedern (17) Sicken (25) im Blechkörper, in der sich die Filterscheibe nach dem Herrunterdrücken (per Spindel oder Hubzylinder) festsetzt.

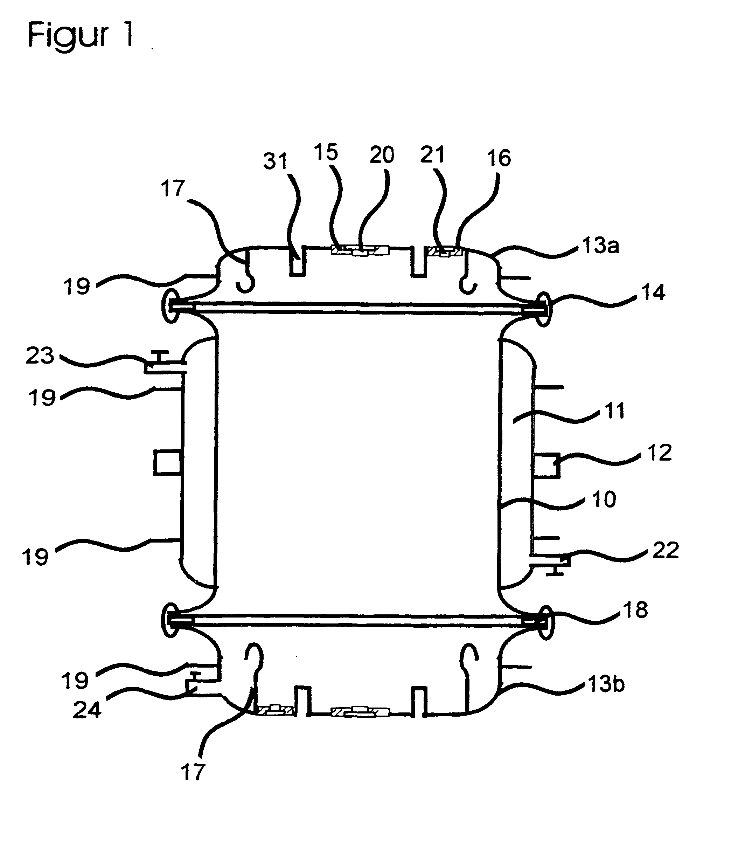

Figur 1 zeigt den Braubehälter bestehend aus dem bodenlosen Mittelteil (10) und den beiden Hohldeckeln (13a,13b). Die Schnittstellen sind mit den Dichtungen (18) versehen und werden mit den Ring-Spannverschlüssen (14) zusammengehalten. Das bodenlose Mittelteil (10) hat einen Doppelmantel (11) zur Kühlung, auf dem zwei Achszapfen (12) und vier Handgriffe (19) zur Drehbarkeit angebracht sind. Die Hohldeckel (13a,13b) haben ebenfalls Handgriffe (19). Desweiteren haben sie eine Rührwerks- und Filteraufnahme (15) mit Verschluss (20) und eine Messfühleraufnahme (16) mit Verschluss (21). Die Spannfedern (17) haben die Aufgabe, eine Filterscheibe vor Beginn des Filtervorganges im oberen und nach dem Filtervorgang im unteren Hohldeckel aufzunehmen. In den Rührwerkständeraufnahmen (31) ist das Rührwerk befestigt.

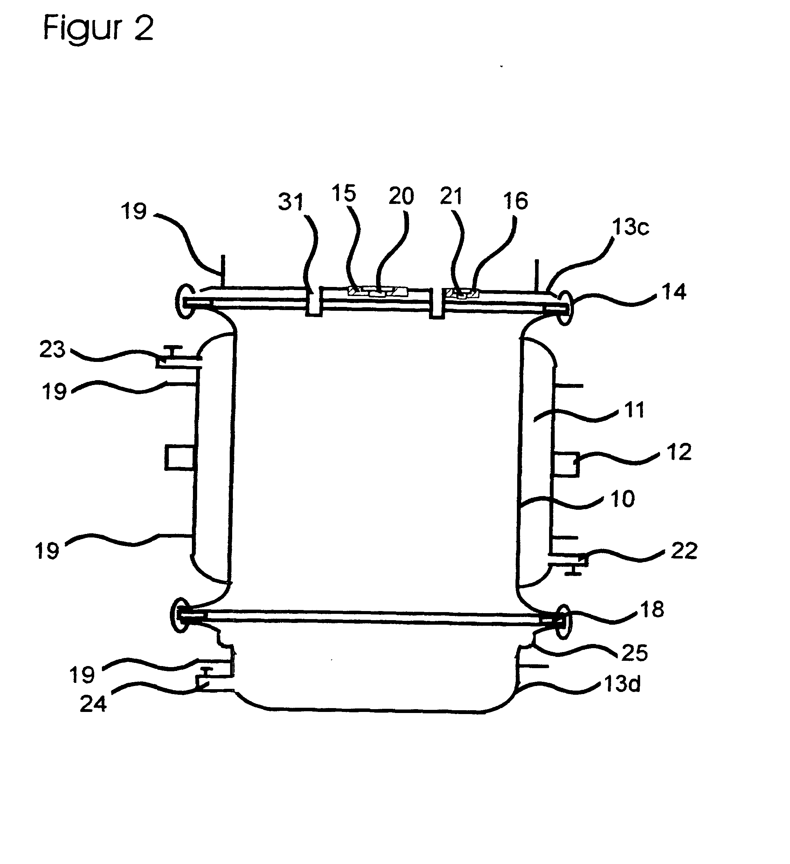

Figur 2 zeigt wie Figur 1 das bodenlose Mittelteil (10) mit dem Hohldeckel (13d) zur Aufnahme des Maischefiltergutes. In dieser Ausführung sind die Aufnahmen für Rührwerk (31), Filterachse (15) und Meßfühler (16) nicht mehr in den Hohldeckeln (13d,13e) eingebaut sondern nur noch in dem Flachdeckel (13c). An Stelle der Spannfedern (17) sind in den Hohldeckeln (13d,13e) zur Arretierung der heruntergedrückten Filterscheibe Sicken (25) angebracht.

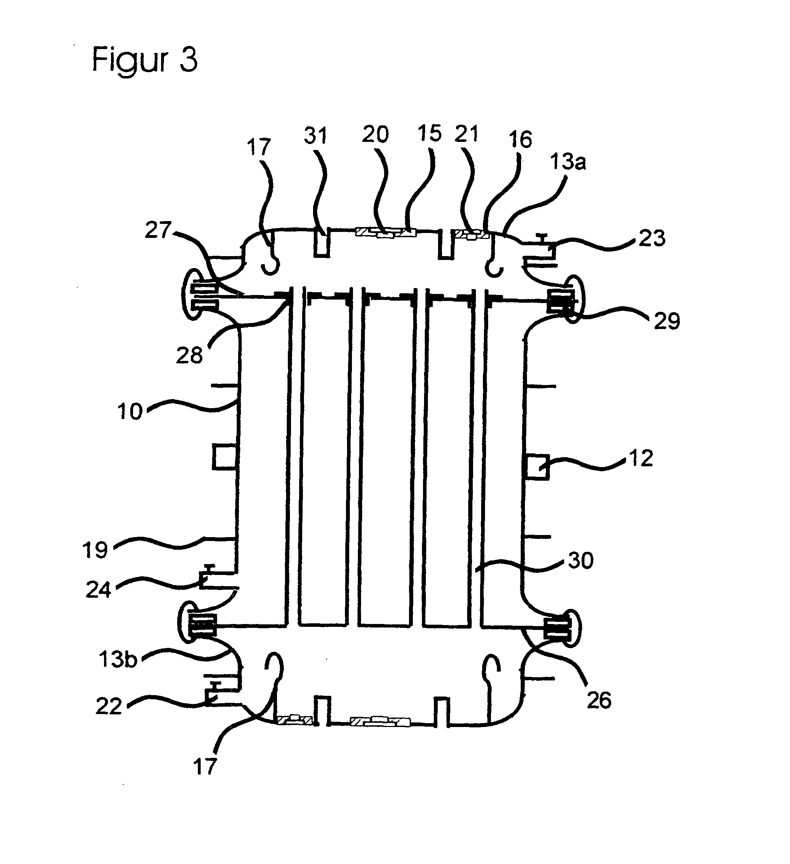

Figur 3 zeigt wie Figur 1 die drei Hauptelemente, bodenloses Mittelteil (10) und die beiden Hohldeckel (13a,13b).Die Funktion des Doppelmantels (11) aus der Figur 1 übernehmen hier die Hohldeckel (13a,13b) zusammen mit den Zwischenböden (26,27).
Am Rohr-Zwischenboden (26) sind Rohre (30) fest angebracht. Diese Rohre werden in die Dichtbuchsen (28) am Buchsen-Zwischenboden (26) geschoben. Die Dichtringe (29) dichten gegenüber dem Mittelteil (10) ab.Vom Wassereinlass (22) strömt das Wasser durch den Hohlkörper (13b) und den Rohren (30) in den Hohlkörper (13a) und tritt aus dem Wasserauslass (23) wieder aus.

Zum Einsetzen der Zwischenböden muss der Behälter zweimal gedreht werden. Nach Abnahme des oberen Hohldeckels wird der Rohr-Zwischenboden (26) mit den Rohren (30) nach unten eingesetzt und mit dem Hohldeckel am bodenlosen Mittelteil (10) verspannt. Dann wird der Braubehälter gedreht. Danach wird der obere Hohldeckel abgenommen und der Buchsen-Zwischenboden (27) über die Rohre (30) geschoben. Zum Schluss werden der obere Hohldeckel. Buchsen-Zwischenboden und Mittelteil verspannt.

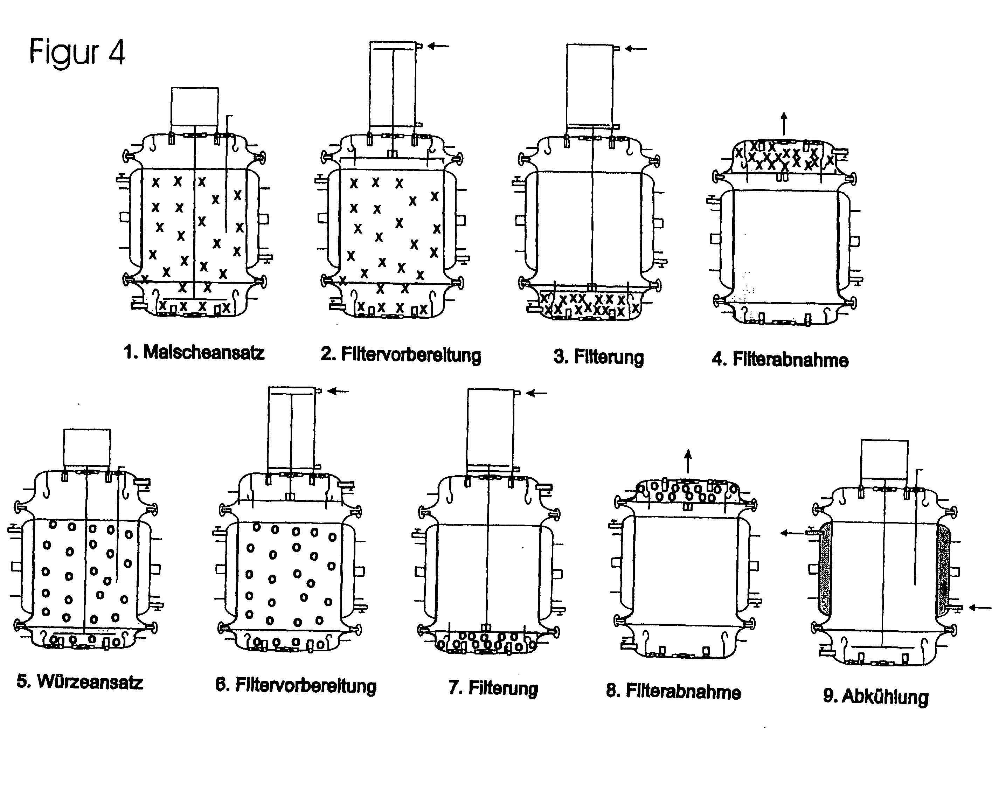

Figur 4 zeigt den Brauablauf. Es können auch mehr als 2 Hohldeckel verwendet werden. In diesem Fall weisen die Hohldeckel unterschiedliche Einzelteile und Baugruppen auf, entsprechend dem vorbestimmten Verfahrensabschnitt.

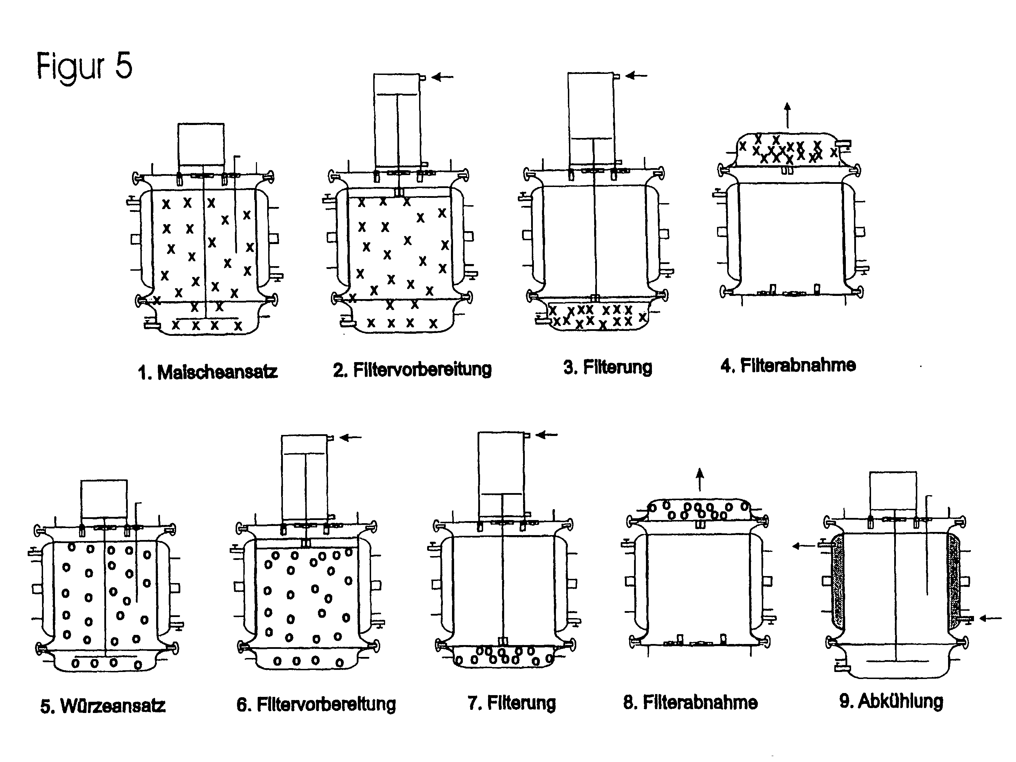

Figur 5 zeigt wie Figur 4 den Brauablauf. Hier kommen die in Figur 2 beschriebenen Hohldeckel (13d,13e) undDer Flachdeckel (13c) zum Einsatz. Der Flachdeckel (13c) trägt alle Aufnahmeteile für Rührwerk, Filterachse und Meßfühler (31,15,16). Die Hohldeckel (13d,13e) sind nicht mehr mit Aufnahmeteilen versehen. Nur eine Sicke (25) ist für die Arretierung der herruntergedrückten Filterscheibe eingearbeitet. Die Hohldeckel (13d,13e) werden hier nur als Böden des Mittelteils (10) eingesetzt. Der Flachdeckel (13c) ist immer oben am Mittelteil (10) angebracht. Wie dargestellt. wird zur Hohldeckelabnahme von außen in jedem Prozessabschnitt der Behälter um 180° gedreht.

### Bezugszeichen:

- 10: Bodenloses Mittelteil
- 11: Doppel-Mantel
- 12: Achszapfen
- 13a: Hohldeckel ( Würze )
- 13b: Hohldeckel ( Maische )
- 13c: Flachdeckel
- 13d: Hohldeckel (Maische)
- 13e: Hohldeckel (Würze)
- 14: Ring-Spannverschluss
- 15: Rührwerks- und Filterachsenaufnahme
- 16: Messfühleraufnahme
- 17: Spannfeder
- 18: Dichtung
- 19: Handgriff
- 20: Verschluss
- 21: Verschluss
- 22: Wassereinlass
- 23: Wasserauslass
- 24: Behälterauslass
- 25: Sicke
- 26: Rohr-Zwischenboden
- 27: Buchsen-Zwischenboden
- 28: Dichtbuchse
- 29: Dichtring
- 30: Rohr
- 31: Rührwerkständeraufnahme

## Patentansprüche

1. Einbehälter-Braugerät, insbesondere für den Hobbybrauer, bestehend aus einem bodenlosen Mittelteil (10), das oben und unten oder nur unten mit unterschiedlich hohen Hohldeckel (nach Ausführung 13a,13b oder 13d,13e)) dichtend und lösbar verbunden ist. wobei ein Hohldeckel (nach Ausführung 13b oder 13d) zur Aufnahme des Maischefiltergutes und ein Hohldeckel (nach Ausführung 13a oder 13e) zur Aufnahme des Würzegutes ausgebildet ist und der gesamte Behälter um 180° so drehbar ist, daß wahlweise der eine oder andere Hohldeckel (nach Ausführung 13a,13b oder 13d,13e) oben abgenommen werden kann.

2. Einbehälter-Braugerät nach Anspruch 1, **dadurch gekennzeichnet, daß** das Mittelteil (10) einen Doppelmantel (11) als Kühleinrichtung besitzt, an dem Achszapfen (12) zur maschinellen und Handgriffe (19) zur manuellen Drehbarkeit des Behälters angeordnet sind.

3. Einbehälter-Braugerät nach einem der vorhergehenden Ansprüche, **dadurch gekennzeichnet, daß** die beiden Hohldeckel (13a,13b) jeweils eine gemeinsame Dichtung mit dem Mittelteil (10) aufweisen und jeweils mittels eines Ringspannverschlusses an diesem befestbar sind, wobei in einer zweiten Ausführung beide Hohldeckel (13d,13e) unten am Mittelteil (10) an der selben Stelle befestbar sind und oben ein Flachdeckel (13c) das Mittelteil (10) verschließt.

4. Einbehälter-Braugerät nach einem der vorhergehenden Ansprüche, **dadurch gekennzeichnet, daß** in den Hohldeckeln (13a,13b) jeweils eine Rührwerksund Filterachsenaufnahme (15), jeweils vier Rührwerkständeraufnahmen, eine Messfühleraufnahme (16) und jeweils zwei Spannfedern (17) oder Sicken (25), die als Halterungen für ein Filterelement, einmal vor Filterbeginn im oberen und nach Filterabschluss im unteren Hohldeckel dienen, eingebaut sind, wobei in einer zweiten Ausführung die Aufnahmeteile für Rührwerk. Filterachse und Meßfühler im Flachdeckel (13c) untergebracht sind.

5. Einbehälter-Braugerät nach einem der vorhergehenden Ansprüche, **dadurch gekennzeichnet, daß** Zwischenböden (26,27) zwischen den Hohldeckel (13a,13b) und dem Mittelteil (10) angeordnet sind, um die Hohldeckel (13a,13b) als Heiz- und Kühlkammern verwenden zu können.

## Claims

1. Single pot brewing device, especially for hobby brewers, consisting of a bottomless middle part (10), connected sealingly and detachably on the top and at the bottom or just at the bottom with hollow lids of differing heights (according to embodiment 13a, 13b or 13d, 13e), whereby one hollow lid (according to embodiment 13b or 13d) is designed for the reception of the mash filter material and one hollow lid (according to embodiment 13a or 13e) for the reception of the wort material, and the whole pot being so rotatable through 180°, that optionally the one or the other hollow lid (according to embodiment 13a, 13b or 13d, 13e) can be detached from the top.

2. Single pot brewing device according to claim 1, **characterized in that** the middle part (10) holds a double coating (11) as cooling device on which are arranged pivots (12) for the mechanical and hand grips (19) for the manual rotatability of the pot.

3. Single pot brewing device according to one of the preceding claims, **characterized in that** the two hollow lids (13a, 13b) each has a common gasket with the middle part (10) and each is fixable to these by means of a bent-lever ring closure, whereby, in a second embodiment, both hollow lids (13d, 13e) are fixable below on the middle part (10) at the same position and on the top a flat lid (13c) closes the middle part (10).

4. Single pot brewing device according to one of the preceding claims, **characterized in that** in the two hollow lids (13a, 13b) are incorporated in each case a stirrer and filter axis receiver (15), in each case four stirrer stand receivers, a measurement sensor receiver (16) and in each case two tension springs (17) or beads (25) which serve as mounts for a filter element, on the one hand before the start of filtering in the upper and after the finishing of filtering in the lower hollow lid, whereby, in a second embodiment, the receiving parts for stirrer, filter axis and measurement sensor are housed in the flat lid (13c).

5. Single pot brewing device according to one of the preceding claims, **characterized in that** intermediate bottoms (26, 27) are arranged between the hollow lids (13a, 13b) and the middle part (10), so that the hollow lids (13a, 13b) can be used as heating and cooling chambers.

## Revendications

1. Appareil de brassage à une seule cuve, en particulier pour l'amateur, consistant d'une partie médiane sans fond (10) reliée étanche et détachable au-dessus et au-dessous ou seulement au-dessous aux couvercles creux d'une altitude variable ( après variante 13a, 13b ou 13d, 13e), tandis que un couvercle creux (après variante 13b ou13d) est façonné pour l'admission de la matière de filtrage de la pâte et un couvercle creux ( après variante 13a ou 13e) pour l'admission de la matière du moût, et la cuve de brassage entière est tellement toumable de 180°, qu'on peut enlever au-dessus au choix l'un ou l'autre couvercle (après variante 13a, 13b ou 13d, 13e).

2. Appareil de brassage à une seule cuve après revendication 1, caractérisé du fait que la partie médiane (10) possède une enveloppe double (11) qui fonctionne comme refroidisseur, auquel sont fixés des manetons (12) pour le tournoiement mécanique et des manettes (19) pour le tournoiement manuel.

3. Appareil de brassage à une seule cuve après une des revendications ci-dessus, caractérisé du fait que les deux couvercles creux (13a, 13b) partageant respectivement un joint d'étanchéité avec la partie médiane (10) et à laquelle ils sont fixables par une fermeture de serrage annulaire, tandis que dans une deuxième variante les deux couvercles creux (13d, 13e) sont fixés au-dessous de la partie médiane (10) à la même position et au-dessus un couvercle plat (13c) enferme la partie médiane (10).

4. Appareil de brassage à une seule cuve après une des revendications ci-dessus caractérisé du fait que dans les deux couvercles creux (13a, 13b) se trouvent respectivement un positionneur pour le dispositif mélangeur et un positionneur pour l'axe de filtre (15), respectivement quatre supports pour le positionneur du dispositif mélangeur, un capteur (16), et respectivement deux ressorts tendeurs (17) ou moulures (25), qui servent comme support pour un élément filtre, une fois avant le processus de filtrage dans le couvercle creux supérieur, à la fin de processus de filtrage dans le couvercle inférieur, tandis que à la deuxième variante le positionneur du dispositif de mélange, l'axe de filtre et le capteur se trouvent dans le couvercle plat (13c).

5. Appareil de brassage à une seule cuve après une des revendications ci-dessus, caractérisé du fois que des fonds intermédiaires (26, 27) se trouvent entre les couvercles creux (13a, 13b) et la partie médiane (10) pour pouvoir utiliser les couvercles creux (13a, 13b) comme chambre de chauffage et chambre de refroidissement.
